# EUROPEAN PATENT APPLICATION

(11) **EP 4 024 923 A1**
(43) Date of publication of application: **06.07.2022**
(21) Application number: 20863954.2
(22) Date of filing: 08.09.2020
(51) Int. Cl.: H04W 8/14

(54) **SESSION MANAGEMENT METHOD AND APPARATUS**

(30) Priority: 09.09.2019 CN 201910849669
(71) Applicant: Huawei Technologies Co., Ltd., Longgang District Shenzhen, Guangdong 518129 (CN)
(72) Inventor: YIN, Yu, Shenzhen, Guangdong 518129 (CN); QI, Caixia, Shenzhen, Guangdong 518129 (CN)
(74) Representative: Thun, Clemens
(86) International application number: PCT/CN2020/114055
(87) International publication number: WO 2021/047514

(57) **Abstract**

A session management method and an apparatus are provided, so that a terminal device accesses a 4G network by using a 5G technology, to support native access of a 5G terminal device. The method includes: A mobility management device receives a mobility management message sent by a terminal device, where the mobility management message includes an N1 container, the N1 container includes a session management message, and the session management message is used to establish, update, or delete a packet data unit PDU session of the terminal device; the mobility management device changes the session management message into a bearer processing message, where the bearer processing message is used to establish, update, or delete a bearer of the terminal device; and the mobility management device sends the bearer processing message to a serving gateway. According to the foregoing method, access to the 4G network can be implemented by using the 5G technology, to support 5G native access.

## Description

This application claims priority to Chinese Patent Application No. 201910849669.0, filed with the China National Intellectual Property Administration on September 9, 2019 and entitled "SESSION MANAGEMENT METHOD AND APPARATUS", which is incorporated herein by reference in its entirety.

### TECHNICAL FIELD

This application relates to the field of communication technologies, and in particular, to a session management method and an apparatus.

### BACKGROUND

Currently, in a 5th generation (5th generation, 5G) network, an access network (access network, AN) accesses an access and mobility management function (access and mobility management function, AMF) through an N2 interface, and a core network is defined as a service based architecture (service based architecture, SBA).

In the 5G network, a session management (session management, SM) and mobility management (mobility management, MM) decoupling function is further introduced. An MM function is performed by an AMF, and an SM function is performed by a session management function (session management function, SMF). However, the SMF cannot directly communicate with a terminal device or the access network, and communicates with the terminal device through an N1 interface between the AMF and the terminal device, and communicates with the access network through an N2 interface between the AMF and the access network. Therefore, the AMF needs to support transparent transmission of an SM-related function parameter or message between the terminal device/the access network and the SMF.

A large quantity of new technologies are used for the 5G network, such as a service-based framework, a hypertext transfer protocol (hyperText transfer protocol, HTTP), or a transmission layer security (transport layer security, TLS). These technologies have not been applied to a mobile communication network, and are not mature at present. In addition, carriers need to invest in the new infrastructure for the 5G network, resulting in high investment costs. As a result, applications of the 5G network are still limited currently.

### SUMMARY

This application provides a session management method and an apparatus, so that a terminal device accesses a 4G network by using a 5G technology, to support native access of a 5G terminal device.

According to a first aspect, this application provides a session management method. The method may include: A mobility management device receives a mobility management message sent by a terminal device, where the mobility management message includes an N1 container, and the N1 container includes a session management message; the mobility management device changes the session management message into a bearer processing message; and the mobility management device sends the bearer processing message to a serving gateway, where the session management message is used to establish, update, or delete a packet data unit PDU session of the terminal device, and the bearer processing message is used to establish, update, or delete a bearer of the terminal device.

According to the foregoing method, when a 5G terminal device and an access device access an evolved packet core network, a 5G session management and mobility management decoupling function can be supported without changing the 5G terminal device and the access device, to ensure that the terminal device supports native access of the 5G terminal device.

In a possible design, when the session management message included in the N1 container is a PDU session establishment request message, where the PDU session establishment request message is used to request to establish a PDU session for the terminal device, the mobility management device selects the serving gateway for the terminal based on the PDU session establishment request message and subscription information of the terminal device. In this way, the terminal device can accurately complete a subsequent operation through an appropriate serving gateway.

In a possible design, the mobility management device determines a type of the bearer processing message based on a type of the session management message included in the N1 container. In this way, the type of the bearer processing message can be accurately determined.

In a possible design, the session management message includes a quality of service parameter of a 5G flow. The mobility management device changes the quality of service parameter of the 5G flow into a bearer quality of service parameter, where the bearer processing message sent by the mobility management device includes the bearer quality of service parameter. In this way, session management can be accurately performed.

According to a second aspect, this application provides a session management method. The method may include: A mobility management device receives, a mobility management message or a session management message sent by an access device, where the mobility management message or the session management message includes an N2 container, the N2 container includes a session management parameter, and the session management parameter is used to establish, update, or delete a packet data unit PDU session of a terminal device; the mobility management device changes the session management parameter into a bearer processing message, where the bearer processing message is used to establish, update, or delete a bearer of the terminal device; and the mobility management device sends the bearer processing message to a serving gateway.

According to the foregoing method, when a 5G terminal device and an access device access an evolved packet core network, a 5G session management and mobility management decoupling function can be supported without changing the 5G terminal device and the access device, to ensure that the terminal device supports native access of the 5G terminal device.

In a possible design, the mobility management device determines a type of the bearer processing message based on a type of the session management parameter included in the N2 container. In this way, the type of the bearer processing message can be accurately determined.

In a possible design, the session management parameter includes a quality of service parameter of a 5G flow. The mobility management device changes the quality of service parameter of the 5G flow into a bearer quality of service parameter, where the bearer processing message sent by the mobility management device includes the bearer quality of service parameter. In this way, session management can be accurately performed.

According to a third aspect, this application provides a session management method. The method may include: A mobility management device receives a bearer processing message sent by a serving gateway, where the bearer processing message is used to establish, update, or delete a bearer of a terminal device; the mobility management device determines an N1 container based on the bearer processing message, where the N1 container includes a session management message, and the session management message is used to establish, update, or delete a packet data unit PDU session of the terminal device; and the mobility management device sends a mobility management message to the terminal device, where the mobility management message includes the N1 container.

According to the foregoing method, when a 5G terminal device and an access device access an evolved packet core network, a 5G session management and mobility management decoupling function can be supported without changing the 5G terminal device and the access device, to ensure that the terminal device supports native access of the 5G terminal device.

In a possible design, the mobility management device determines, based on a type of the bearer processing message, a type of the session management message included in the N1 container. In this way, the type of the session management message can be accurately determined.

In a possible design, the bearer processing message includes a 4G quality of service parameter. The mobility management device changes the 4G quality of service parameter into a 5G quality of service parameter, where the N1 container in the mobility management message sent by the mobility management device includes the 5G quality of service parameter. In this way, session management can be accurately performed.

In a possible design, the mobility management device determines a session aggregate maximum rate based on an access device name aggregate maximum rate, or determines a quality of service parameter of a 5G flow based on a bearer quality of service parameter, where the 4G quality of service parameter includes the access device name aggregate maximum rate or the bearer quality of service parameter, and the 5G quality of service parameter includes the session aggregate maximum rate or the quality of service parameter of the 5G flow. In this way, a corresponding parameter can be accurately determined, so that session management can be accurately performed.

In a possible design, when the N1 container in the mobility management message sent by the mobility management device includes the 5G quality of service parameter, the mobility management device determines a rule operation of a quality of service rule or an operation code of a quality of service flow description based on the type of the bearer processing message and the 4G quality of service parameter, where the quality of service parameter of the 5G flow includes the quality of service rule or the quality of service flow description. In this way, a corresponding parameter can be accurately determined, so that session management can be accurately performed.

According to a fourth aspect, this application provides a session management method. The method may include: A mobility management device receives a bearer processing message sent by a serving gateway, where the bearer processing message is used to establish, update, or delete a bearer of a terminal device; the mobility management device determines an N2 container based on the bearer processing message, where the N2 container includes a session management parameter, and the session management parameter is used to establish, update, or delete a packet data unit PDU session of the terminal device; and the mobility management device sends a mobility management message or a session management message to an access device, where the mobility management message or the session management message includes the N2 container.

According to the foregoing method, when a 5G terminal device and an access device access an evolved packet core network, a 5G session management and mobility management decoupling function can be supported without changing the 5G terminal device and the access device, to ensure that the terminal device supports native access of the 5G terminal device.

In a possible design, the mobility management device determines, based on a type of the bearer processing message, a type of the session management parameter included in the N2 container. In this way, the type of the session management parameter can be accurately determined.

In a possible design, the bearer processing message includes a 4G quality of service parameter. The mobility management device changes the 4G quality of service parameter into a 5G quality of service parameter, where the N2 container in the mobility management message or the session management message sent by the mobility management device includes the 5G quality of service parameter. In this way, session management can be accurately performed.

In a possible design, the mobility management device determines a session aggregate maximum rate based on an access device name aggregate maximum rate, or determines a quality of service parameter of a 5G flow based on a bearer quality of service parameter, where the 4G quality of service parameter includes the access device name aggregate maximum rate or the bearer quality of service parameter, and the 5G quality of service parameter includes the session aggregate maximum rate or the quality of service parameter of the 5G flow. In this way, a corresponding parameter can be accurately determined, so that session management can be accurately performed.

According to a fifth aspect, this application further provides a mobility management device. The mobility management device has a function of implementing the mobility management device in the method example of the first aspect. The function may be implemented by hardware, or may be implemented by hardware executing corresponding software. The hardware or software includes one or more modules corresponding to the function.

In a possible design, a structure of the mobility management device includes a processing unit and a communication unit. These units may perform corresponding functions in the method example of the first aspect. For details, refer to the detailed descriptions in the method example. Details are not described herein again.

In a possible design, a structure of the mobility management device includes a communication interface and a processor, and optionally may further include a memory. The communication interface is configured to: send and receive data (information or a signal), and communicate and interact with another device in a communication system. The processor is configured to support the mobility management device to perform a corresponding function of the mobility management device in the method of the first aspect. The memory is coupled to the processor, and stores program instructions and data that are necessary for the mobility management device.

According to a sixth aspect, this application further provides a mobility management device. The mobility management device has a function of implementing the mobility management device in the method example of the second aspect. The function may be implemented by hardware, or may be implemented by hardware executing corresponding software. The hardware or software includes one or more modules corresponding to the function.

In a possible design, a structure of the mobility management device includes a processing unit and a communication unit. These units may perform corresponding functions in the method example of the second aspect. For details, refer to the detailed descriptions in the method example. Details are not described herein again.

In a possible design, a structure of the mobility management device includes a communication interface and a processor, and optionally may further include a memory. The communication interface is configured to: send and receive data (information or a signal), and communicate and interact with another device in a communication system. The processor is configured to support the mobility management device to perform a corresponding function of the mobility management device in the method of the second aspect. The memory is coupled to the processor, and stores program instructions and data that are necessary for the mobility management device.

According to a seventh aspect, this application further provides a mobility management device. The mobility management device has a function of implementing the mobility management device in the method example of the third aspect. The function may be implemented by hardware, or may be implemented by hardware executing corresponding software. The hardware or software includes one or more modules corresponding to the function.

In a possible design, a structure of the mobility management device includes a processing unit and a communication unit. These units may perform corresponding functions in the method example of the third aspect. For details, refer to the detailed descriptions in the method example. Details are not described herein again.

In a possible design, a structure of the mobility management device includes a communication interface and a processor, and optionally may further include a memory. The communication interface is configured to: send and receive data (information or a signal), and communicate and interact with another device in a communication system. The processor is configured to support the mobility management device to perform a corresponding function of the mobility management device in the method of the third aspect. The memory is coupled to the processor, and stores program instructions and data that are necessary for the mobility management device.

According to an eighth aspect, this application further provides a mobility management device. The mobility management device has a function of implementing the mobility management device in the method example of the fourth aspect. The function may be implemented by hardware, or may be implemented by hardware executing corresponding software. The hardware or software includes one or more modules corresponding to the function.

In a possible design, a structure of the mobility management device includes a processing unit and a communication unit. These units may perform corresponding functions in the method example of the fourth aspect. For details, refer to the detailed descriptions in the method example. Details are not described herein again.

In a possible design, a structure of the mobility management device includes a communication interface and a processor, and optionally may further include a memory. The communication interface is configured to: send and receive data (information or a signal), and communicate and interact with another device in a communication system. The processor is configured to support the mobility management device to perform a corresponding function of the mobility management device in the method of the fourth aspect. The memory is coupled to the processor, and stores program instructions and data that are necessary for the mobility management device.

According to a ninth aspect, this application further provides a communication system. The communication system includes at least the mobility management device mentioned in the foregoing designs. Further, the mobility management device in the communication system may perform any method performed by the mobility management device in the foregoing methods.

According to a tenth aspect, this application provides a computer-readable storage medium. The computer-readable storage medium stores computer-executable instructions. When being invoked by a computer, the computer-executable instructions are used to enable the computer to perform the method in any one of the first aspect or the possible designs of the first aspect, the second aspect or the possible designs of the second aspect, the third aspect or the possible designs of the third aspect, or the fourth aspect or the possible designs of the fourth aspect.

According to an eleventh aspect, this application provides a computer program product including instructions. When the computer program product runs on a computer, the computer is enabled to perform the method in any one of the first aspect or the possible designs of the first aspect, the second aspect or the possible designs of the second aspect, the third aspect or the possible designs of the third aspect, or the fourth aspect or the possible designs of the fourth aspect.

According to a twelfth aspect, this application provides a chip. The chip is coupled to a memory, and is configured to read and execute program instructions stored in the memory, to implement the method in any one of the first aspect or the possible designs of the first aspect, the second aspect or the possible designs of the second aspect, the third aspect or the possible designs of the third aspect, or the fourth aspect or the possible designs of the fourth aspect.

### BRIEF DESCRIPTION OF DRAWINGS

FIG. 1 is a schematic diagram of an architecture of a 5G network in a conventional technology;
FIG. 2a is a schematic diagram of an architecture of a communication system according to this application;
FIG. 2b is a diagram of a 4G NSA architecture according to this application;
FIG. 3 is a flowchart of a session management method according to this application;
FIG. 4 is a flowchart of another session management method according to this application;
FIG. 5 is a flowchart of another session management method according to this application;
FIG. 6 is a flowchart of another session management method according to this application;
FIG. 7 is a flowchart of an example of a session management method according to this application;
FIG. 8 is a flowchart of an example of another session management method according to this application;
FIG. 9A and FIG. 9B are a flowchart of an example of another session management method according to this application;
FIG. 10A and FIG. 10B are a flowchart of an example of another session management method according to this application;
FIG. 11 is a schematic diagram of a structure of a mobility management device according to this application; and
FIG. 12 is a diagram of a structure of a mobility management device according to this application.

### DESCRIPTION OF EMBODIMENTS

The following further describes in detail this application with reference to the accompanying drawings.

Embodiments of this application provide a session management method and an apparatus, so that a terminal device accesses a 4G network by using a 5G technology, to support native access of a 5G terminal device. The method and the apparatus described in this application are based on a same inventive concept. Because problem-resolving principles of the method and the apparatus are similar, mutual reference may be made to implementations of the apparatus and the method. Repeated parts are not described again.

In the descriptions of this application, terms such as "first" and "second" are merely used for distinction and description, and should not be understood as an indication or implication of relative importance, or as an indication or implication of a sequence.

To describe the technical solutions in embodiments of this application more clearly, the following describes the session management method and the apparatus provided in embodiments of this application in detail with reference to the accompanying drawings.

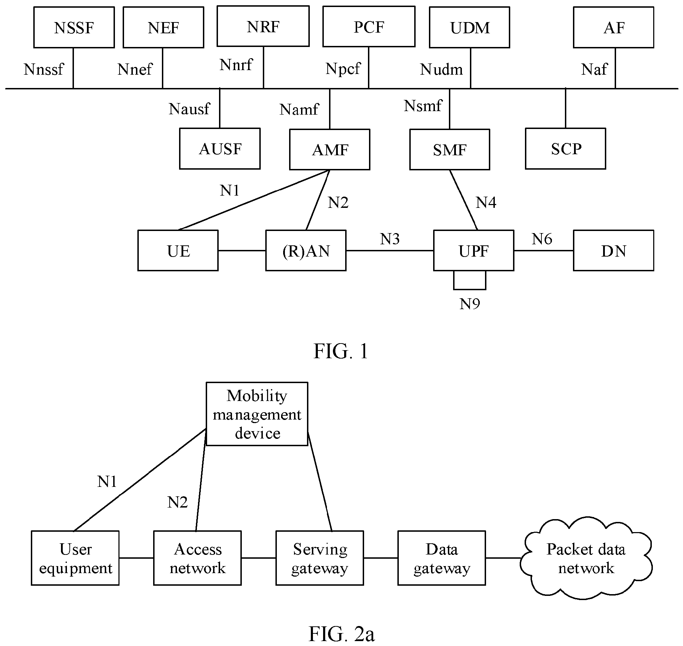

FIG. 1 shows an architecture of a 5G network in a conventional technology. The architecture of the 5G network includes a network slice selection function (network slice selection function, NSSF) device, a network exposure function (network exposure function, NEF) device, a network function repository function ((network function, NF) repository function, NRF) device, a policy control function (policy control function, PCF) device, a unified data management (unified data management, UDM) device, an application function (application function, AF) device, an authentication server function (authentication server function, AUSF) device, a core network access and mobility management function (access and mobility management function, AMF) device, a session management function (session management function, SMF) device, a service communication proxy SCP, a terminal device (also referred to as user equipment (user equipment, UE)), a radio access network (radio access network, RAN) device, a user plane function (user plane function, UPF), and a data network (data network, DN).

In an existing 5G network, a terminal device accesses an access and mobility management function device through an N1 interface, and an access network accesses the access and mobility management function device through an N2 interface. A core network is defined as a service based architecture.

In the 5G network, a session management (session management, SM) and mobility management (mobility management, MM) decoupling function is further introduced. An MM function is performed by an AMF, and an SM function is performed by an SMF. However, the SMF cannot directly communicate with the terminal device or the access network, and communicates with the terminal device through the N1 interface between the AMF and the terminal device, and communicates with the terminal device through the N2 interface between the AMF and the access network. Therefore, the AMF needs to support transparent transmission of an SM-related function parameter or message between the terminal device/the access network and the SMF.

A large quantity of new technologies are used for the 5G network, such as a service-based framework, a hypertext transfer protocol (hyperText transfer protocol, HTTP), or a transmission layer security (transport layer security, TLS). These technologies have not been applied to a mobile communication network, and are not mature at present. In addition, carriers need to invest in the new infrastructure for the 5G network, resulting in high investment costs. As a result, applications of the 5G network are limited. Based on this, in consideration of compatibility between a 5G network and a 4th generation (4th generation, 4G) network, this application provides a method in which a terminal device and an access network can access an evolved packet core (evolved packet core, EPC) network through an N1 or N2 interface and 5G native access is supported when the EPC network infrastructure is reused.

Based on the foregoing descriptions, this application provides a possible architecture of a communication system. As shown in FIG. 2a, the architecture of the communication system may include a terminal device, an access network, a mobility management device, a serving gateway, a data gateway, and a packet data network.

The terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device or a vehicle-mounted device that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device performs access through a local radio access network.

The mobility management device is responsible for functions such as location management, connection management, security authentication, and gateway selection of a mobile user device.

The serving gateway is a local access gateway of the terminal device and is responsible for connection management and data forwarding that are related to an access technology.

The data gateway is a gateway for the terminal device to access an external data network.

The EPC network may also be a network in which a control plane and a user plane are separated, that is, a control plane and a user plane of the serving gateway and a control plane and a user plane of the data gateway are separated, where there are a serving gateway for user plane, a serving gateway for control plane, a data gateway for user plane, and a data gateway for control plane. The serving gateway for control plane is responsible for connection management and data forwarding control that are related to the access technology, and the serving gateway for user plane is responsible for data forwarding. The data gateway for control plane is responsible for data forwarding control, and the data gateway for user plane is responsible for data forwarding. The serving gateway for control plane may be deployed together with the data gateway for control plane, and the serving gateway for user plane may also be deployed together with the data gateway for user plane.

Actually, the terminal device may be a 5G terminal. In an evolved universal terrestrial radio access network (evolved universal terrestrial radio access network, evolved E-UTRAN) or a new radio (new radio, NR) access network, the access device may be a next generation evolved NodeB (next generation evolved NodeB, ng-eNB) or a next generation NodeB (next generation NodeB, gNB) in a 5G mobile communication system, the core network is a network element in the EPC network, the mobility management device may be a mobility management entity (mobility management entity, MME), the serving gateway may be a serving gateway (serving gateway, S-GW), and the data gateway may be a packet data network gateway (packet data network gateway, PDN-GW). In a network in which a control plane and a user plane are separated, the serving gateway may be a serving gateway for user plane (serving gateway user plane, SGW-U) and a serving gateway for control plane (serving gateway control plane, SGW-C), and the data gateway may be a data gateway for user plane (packet data network gateway user plane, PGW-U) and a data gateway for control plane (packet data network gateway control plane, PGW-C). The mobility management device and the serving gateway may be enhanced based on an existing EPC network, to support native access of a 5G terminal device.

It should be noted that, a mobility management device which is enhanced may be referred to as an enhanced mobility management device. The enhanced mobility management device can support a 5G session management and mobility management decoupling function.

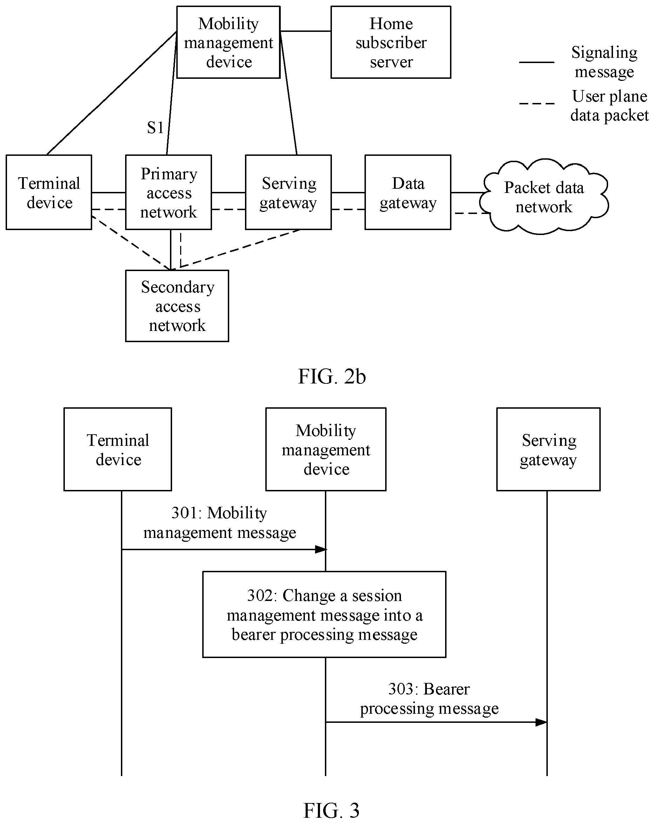

In a 4G non-standalone architecture (non-standalone architecture, NSA) shown in FIG. 2b, a terminal device is a 4G terminal device and accesses a mobility management device through the 4G NAS, and a primary access network accesses the mobility management device through a 4G S1 interface. A user plane data packet of the terminal device may be forwarded through both the primary access network and a secondary access network. The primary access network is an E-UTRAN, and a corresponding access device is an evolved NodeB (evolved NodeB, eNodeB). The secondary access network is an evolved E-UTRAN or an NR access network, and a corresponding access device is an ng-eNB or a gNB. A high bandwidth of the secondary access network provides the 4G terminal device with service experience comparable to that of the 5G network. However, in the NSA architecture, the primary access network and the secondary access network need to be deployed. This architecture is applicable to local hotspot deployment and requires high network-wide deployment costs. Therefore, using the network shown in FIG. 2a provided in this application can avoid the foregoing problem, and the 4G network can be flexibly accessed by using a 5G technology.

It should be noted that the architectures of the communication systems (or networks) shown in FIG. 2a and FIG. 2b are not limited to including only the devices shown in the figure, and may further include another device that is not shown in the figure. Details are not described herein in this application one by one.

A session management method provided in an embodiment of this application is applicable to the communication system shown in FIG. 2a. Refer to FIG. 3. A specific procedure of the method may include the following steps.

Step 301: A mobility management device receives a mobility management message sent by a terminal device, where the mobility management message includes an N1 container, the N1 container includes a session management message, and the session management message is used to establish, update, or delete a packet data unit (packet data unit, PDU) session of the terminal device.

In this embodiment, the mobility management device is a device obtained by enhancing an existing mobility management device.

For example, the terminal device sends the mobility management message to the mobility management device through an access device, the terminal device sends the mobility management message to the access device, and then the access device forwards the mobility management message to the mobility management device.

The mobility management device may receive, according to a 5G NAS protocol, the mobility management message sent by the terminal device.

In an optional embodiment, the N1 container may be a payload container (payload container).

In a specific implementation, the mobility management message may be an uplink non-access stratum (non-access stratum, NAS) transmission message, and the session management message may be a PDU session establishment request message.

In an example manner, when the session management message included in the N1 container is the PDU session establishment request message, where the PDU session establishment request message is used to request to establish a PDU session for the terminal device, the mobility management device selects a serving gateway for the terminal based on the PDU session establishment request message and subscription information of the terminal device. The requesting to establish a PDU session for the terminal device is requesting to establish the first PDU session for the terminal device. When subsequently requesting to establish a PDU session for the terminal device, the mobility management device does not need to select the serving gateway.

Step 302: The mobility management device changes the session management message into a bearer processing message, where the bearer processing message is used to establish, update, or delete a bearer of the terminal device.

In an optional implementation, the mobility management device determines a type of the bearer processing message based on a type of the session management message included in the N1 container.

In an example, the session management message includes a quality of service parameter of a 5G flow. The mobility management device changes the quality of service parameter of the 5G flow into a bearer quality of service parameter, where the bearer processing message sent by the mobility management device includes the bearer quality of service parameter. The quality of service parameter of the 5G flow is a 5G quality of service (quality of service, QoS) parameter, and the quality of service parameter is a 4G bearer QoS parameter.

Step 303: The mobility management device sends the bearer processing message to the serving gateway.

In an optional implementation, the bearer processing message may be a tunneling protocol (GPRS tunneling protocol, GTP) message.

Specifically, the mobility management device sends the bearer processing message to the serving gateway according to a control plane tunnel endpoint protocol GTP-C.

In a specific implementation, after step 303, the serving gateway forwards the bearer processing message to a data gateway.

According to the session management method provided in this embodiment of this application, when a 5G terminal device and an access device access an evolved packet core network, a 5G session management and mobility management decoupling function can be supported without changing the 5G terminal device and the access device, to ensure that the terminal device supports 5G native access.

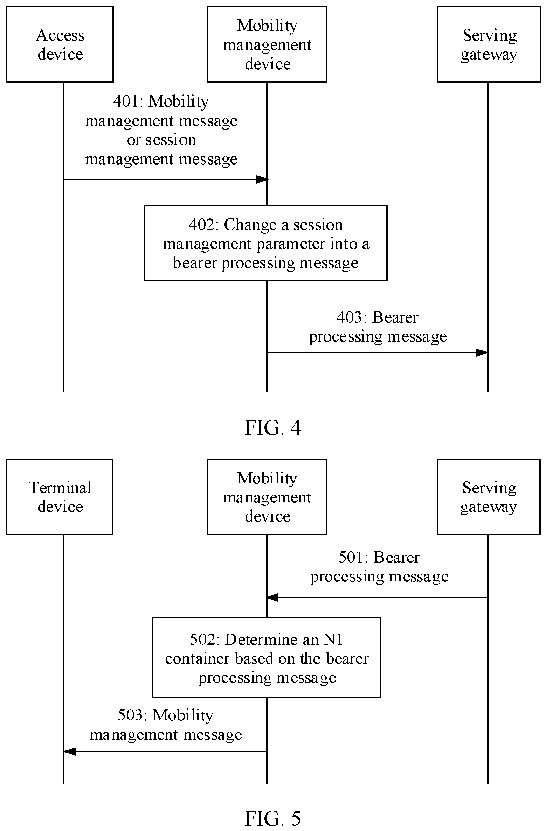

Another session management method provided in an embodiment of this application is applicable to the communication system shown in FIG. 2a. Refer to FIG. 4. A specific procedure of the method may include the following steps.

Step 401: A mobility management device receives a mobility management message or a session management message sent by an access device, where the mobility management message or the session management message includes an N2 container, the N2 container includes a session management parameter, and the session management parameter is used to establish, update, or delete a packet data unit PDU session of a terminal device.

In this embodiment, the mobility management device is a device obtained by enhancing an existing mobility management device.

Specifically, the mobility management device receives, according to a next generation application protocol (NG application protocol, NGAP), the mobility management message or the session management message sent by the access device.

For example, the mobility management message is an initial context response message, and the session management parameter is a PDU session resource establishment response transfer information element. Alternatively, the session management message is a PDU session resource update response message, and the session management parameter is a PDU session resource update response transfer information element.

Step 402: The mobility management device changes the session management parameter into a bearer processing message, where the bearer processing message is used to establish, update, or delete a bearer of the terminal device.

In an optional implementation, the mobility management device determines a type of the bearer processing message based on a type of the session management parameter included in the N2 container.

In an example, the session management parameter includes a quality of service parameter of a 5G flow. The mobility management device changes the quality of service parameter of the 5G flow into a bearer quality of service parameter, where the bearer processing message sent by the mobility management device includes the bearer quality of service parameter. The quality of service parameter of the 5G flow is a 5G quality of service (quality of service, QoS) parameter, and the quality of service parameter is a 4G bearer QoS parameter.

Step 403: The mobility management device sends the bearer processing message to a serving gateway.

In an optional implementation, the bearer processing message may be a tunneling protocol (GPRS tunneling protocol, GTP) message.

Specifically, the mobility management device sends the bearer processing message to the serving gateway according to a GTP-C protocol.

In a specific implementation, after step 403, the serving gateway forwards the bearer processing message to a data gateway.

According to the session management method provided in this embodiment of this application, when a 5G terminal device and an access device access an evolved packet core network, a 5G session management and mobility management decoupling function can be supported without changing the 5G terminal device and the access device, to ensure that the terminal device supports native access of the 5G terminal device.

Another session management method provided in an embodiment of this application is applicable to the communication system shown in FIG. 2a. Refer to FIG. 5. A specific procedure of the method may include the following steps.

Step 501: A mobility management device receives a bearer processing message sent by a serving gateway, where the bearer processing message is used to establish, update, or delete a bearer of a terminal device.

In this embodiment, the mobility management device is a device obtained by enhancing an existing mobility management device.

For example, the mobility management device may receive, according to a GTP-C protocol, the bearer processing message sent by the serving gateway.

Specifically, before step 501, the serving gateway first receives the bearer processing message sent by a data gateway.

Step 502: The mobility management device determines an N1 container based on the bearer processing message, where the N1 container includes a session management message, and the session management message is used to establish, update, or delete a PDU session of the terminal device.

In an optional implementation, the mobility management device determines, based on a type of the bearer processing message, a type of the session management message included in the N1 container.

Step 503: The mobility management device sends a mobility management message to the terminal device, where the mobility management message includes the N1 container.

Specifically, the mobility management device may send the mobility management message to the terminal device according to a 5G NAS protocol.

When the mobility management device sends the mobility management message to the terminal device, the mobility management device first sends the mobility management message to an access device, and then the access device sends the mobility management message to the terminal device.

In an example implementation, the bearer processing message includes a 4G quality of service parameter. The mobility management device changes the 4G quality of service parameter into a 5G quality of service parameter, where the N1 container in the mobility management message sent by the mobility management device includes the 5G quality of service parameter.

Specifically, the mobility management device determines a session aggregate maximum rate based on an access device name aggregate maximum rate, or determines a quality of service parameter of a 5G flow based on a bearer quality of service parameter, where the 4G quality of service parameter includes the access device name aggregate maximum rate or the bearer quality of service parameter, and the 5G quality of service parameter includes the session aggregate maximum rate or the quality of service parameter of the 5G flow.

In an optional implementation, when the N1 container in the mobility management message sent by the mobility management device includes the 5G quality of service parameter, the mobility management device determines a rule operation of a quality of service rule or an operation code of a quality of service flow description based on the type of the bearer processing message and the 4G quality of service parameter, where the quality of service parameter of the 5G flow includes the quality of service rule or the quality of service flow description.

For example, the session management message in the N1 container is a PDU session update request message, and the mobility management message is a downlink NAS transmission message.

According to the session management method provided in this embodiment of this application, when a 5G terminal device and an access device access an evolved packet core network, a 5G session management and mobility management decoupling function can be supported without changing the 5G terminal device and the access device, to ensure that the terminal device supports native access of the 5G terminal device.

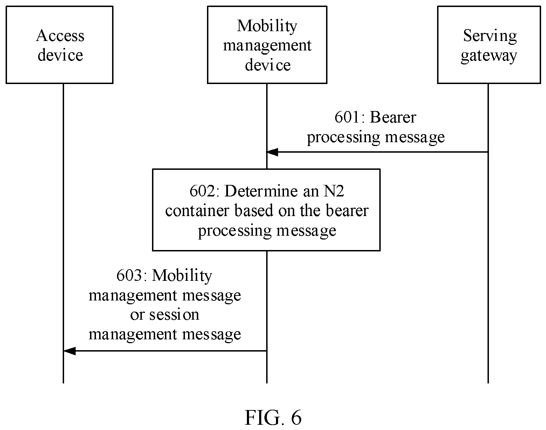

Another session management method provided in an embodiment of this application is applicable to the communication system shown in FIG. 2a. Refer to FIG. 6. A specific procedure of the method may include the following steps.

Step 601: A mobility management device receives a bearer processing message sent by a serving gateway, where the bearer processing message is used to establish, update, or delete a bearer of a terminal device.

In this embodiment, the mobility management device is a device obtained by enhancing an existing mobility management device.

For example, the mobility management device may receive, according to a GTP-C protocol, the bearer processing message sent by the serving gateway.

Specifically, before step 601, the serving gateway first receives the bearer processing message sent by a data gateway.

Step 602: The mobility management device determines an N2 container based on the bearer processing message, where the N2 container includes a session management parameter, and the session management parameter is used to establish, update, or delete a packet data unit PDU session of the terminal device.

In an optional implementation, the mobility management device determines, based on a type of the bearer processing message, a type of the session management parameter included in the N2 container.

Step 603: The mobility management device sends a mobility management message or a session management message to an access device, where the mobility management message or the session management message includes the N2 container.

Specifically, the mobility management device may send the mobility management message or the session management message to the access device according to an NGAP protocol.

In an optional implementation, the bearer processing message includes a 4G quality of service parameter. The mobility management device changes the 4G quality of service parameter into a 5G quality of service parameter, where the N2 container in the mobility management message or the session management message sent by the mobility management device includes the 5G quality of service parameter.

For example, the mobility management device determines a session aggregate maximum rate based on an access device name aggregate maximum rate, or determines a quality of service parameter of a 5G flow based on a bearer quality of service parameter, where the 4G quality of service parameter includes the access device name aggregate maximum rate or the bearer quality of service parameter, and the 5G quality of service parameter includes the session aggregate maximum rate or the quality of service parameter of the 5G flow.

In an example, the session management message may be a PDU session resource update request message, and the N2 container is a PDU session resource update request transfer type.

According to the session management method provided in this embodiment of this application, when a 5G terminal device and an access device access an evolved packet core network, a 5G session management and mobility management decoupling function can be supported without changing the 5G terminal device and the access device, to ensure that the terminal device supports native access of the 5G terminal device.

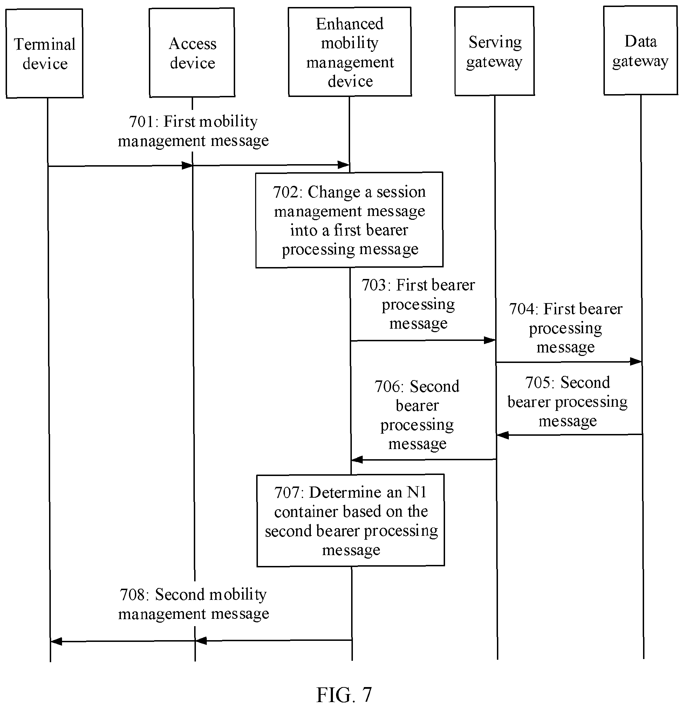

Based on the foregoing embodiments, an embodiment of this application provides an example of a session management method. In this example, a mobility management device is shown as an enhanced mobility management device. Refer to FIG. 7. A specific procedure of the example may include the following steps.

Step 701: A terminal device sends a first mobility management message to the enhanced mobility management network element, where the first mobility management message includes an N1 container, the N1 container includes a session management message, and the session management message is used to establish, update, or delete a PDU session of the terminal device.

The first mobility management message is the mobility management message in the embodiment shown in FIG. 3.

Specifically, the terminal device first sends the first mobility management message to an access device, and then the access device forwards the first mobility management message to the enhanced mobility management device.

Step 702: The enhanced mobility management device changes the session management message into a first bearer processing message, where the first bearer processing message is used to establish, update, or delete a bearer of the terminal device.

The first bearer processing message is the bearer processing message in the embodiment shown in FIG. 3.

Step 703: The enhanced mobility management device sends the first bearer processing message to a serving gateway.

Step 704: The serving gateway sends the first bearer processing message to a data gateway.

Step 705: The data gateway sends a second bearer processing message to the serving gateway, where the second bearer processing message is used to establish, update, or delete the bearer of the terminal device.

The second bearer processing message is the bearer processing message in the embodiment shown in FIG. 5.

Step 706: The serving gateway sends the second bearer processing message to the enhanced mobility management device.

Step 707: The enhanced mobility management device determines an N1 container based on the second bearer processing message, where the N1 container includes a session management message, and the session management message is used to establish, update, or delete a PDU session of the terminal device.

Step 708: The enhanced mobility management device sends a second mobility management message to the terminal device, where the second mobility management message includes the N1 container.

The second mobility management message is the mobility management message in the embodiment shown in FIG. 5.

Specifically, the enhanced mobility management device first sends the second mobility management message to the access device, and then the access device sends the second mobility management message to the terminal device.

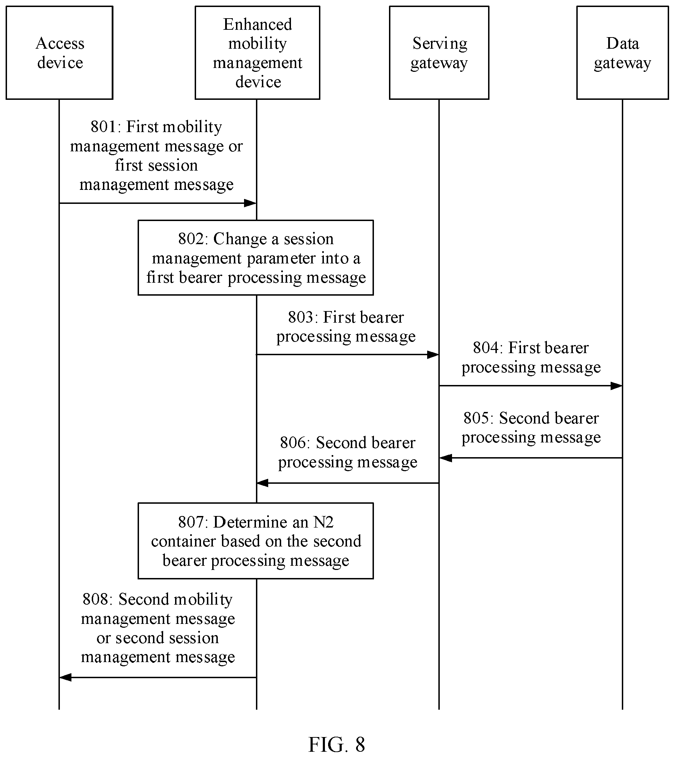

Based on the foregoing embodiments, an embodiment of this application further provides an example of another session management method. In this example, a mobility management device is shown as an enhanced mobility management device. Refer to FIG. 8. A specific procedure of the example may include the following steps.

Step 801: An access device sends a first mobility management message or a first session management message to the enhanced mobility management device, where the first mobility management message or the first session management message includes an N2 container, the N2 container includes a session management parameter, and the session management parameter is used to establish, update, or delete a packet data unit PDU session of a terminal device.

The first mobility management message or the first session management message is the mobility management message or the session management message in the embodiment shown in FIG. 4.

Step 802: The enhanced mobility management device changes the session management parameter into a first bearer processing message, where the first bearer processing message is used to establish, update, or delete a bearer of the terminal device.

The first bearer processing message is the bearer processing message in the embodiment shown in FIG. 4.

Step 803: The enhanced mobility management device sends the first bearer processing message to a serving gateway.

Step 804: The serving gateway sends the first bearer processing message to a data gateway.

Step 805: The data gateway sends a second bearer processing message to the serving gateway, where the second bearer processing message is used to establish, update, or delete the bearer of the terminal device.

The second bearer processing message is the bearer processing message in the embodiment shown in FIG. 6.

Step 806: The serving gateway sends the second bearer processing message to the enhanced mobility management device.

Step 807: The enhanced mobility management device determines an N2 container based on the second bearer processing message, where the N2 container includes a session management parameter, and the session management parameter is used to establish, update, or delete a packet data unit PDU session of the terminal device.

Step 808: The enhanced mobility management device sends a second mobility management message or a second session management message to the access device, where the second mobility management message or the second session management message includes the N2 container.

The second mobility management message or the second session management message is the mobility management message or the session management message in the embodiment shown in FIG. 6.

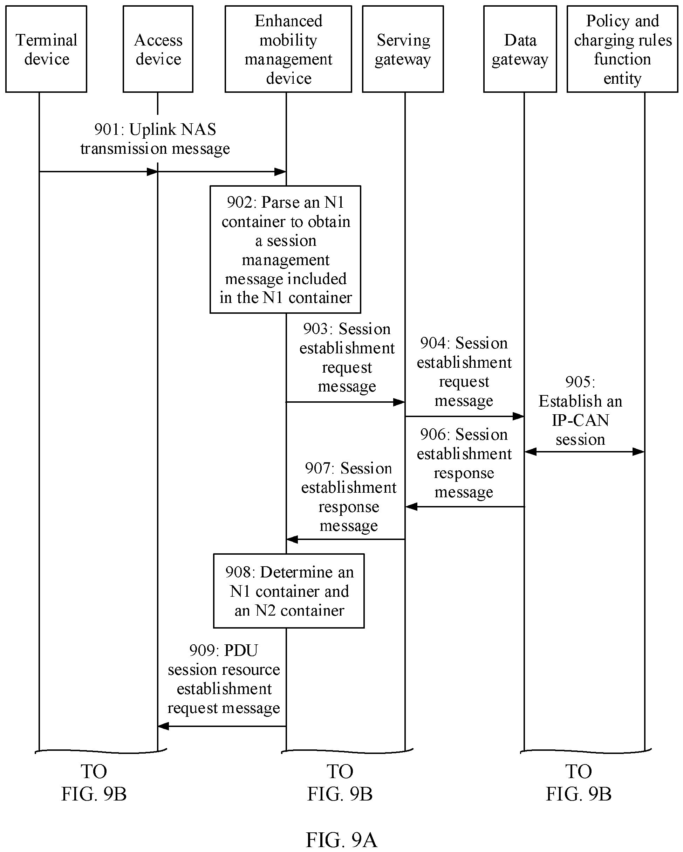

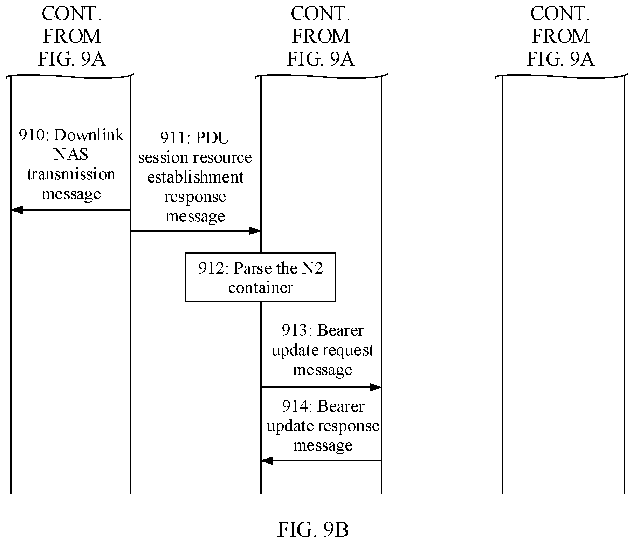

Based on the foregoing embodiments, an embodiment of this application provides an example of a session management method. In this example, a mobility management device is shown as an enhanced mobility management device. This example shows a specific process of session management in a PDU session establishment procedure. Refer to FIG. 9A and FIG. 9B. A specific procedure of the example may include the following steps.

Step 901: A terminal device sends an uplink NAS transmission message to the enhanced mobility management device, where the uplink NAS transmission message includes an N1 container, the N1 container includes a session management message, and the session management message is a PDU session establishment request message.

When a service needs to be performed, the terminal device initiates a PDU session establishment procedure to request to establish a PDU session corresponding to the service, to perform step 901.

In an optional implementation, the uplink NAS transmission message further includes a type of the N1 container.

Specifically, the terminal device first sends the uplink NAS transmission message to an access device, and then the access device forwards the uplink NAS transmission message to the enhanced mobility management device.

Step 902: The enhanced mobility management device parses the N1 container to obtain the session management message included in the N1 container, that is, the PDU session establishment request message.

Specifically, the enhanced mobility management device determines, based on the type of the N1 container, that the N1 container carries N1 session management information. In this case, the enhanced mobility management network element parses the session management message included in the N1 container, that is, the PDU session establishment request message.

Step 903: The enhanced mobility management network element sends a session establishment request message to a serving gateway.

The session establishment request message is a GTP message.

Specifically, the session establishment request message includes information obtained from the N1 container, for example, a packet data network type (packet data network type, PDN Type) and an extended protocol configuration option (extended protocol configuration options, ePCO).

Step 904: The serving gateway sends the session establishment request message to a data gateway, to request the data gateway to establish a corresponding PDN connection.

Step 905: The data gateway establishes a connectivity access network (Internet Protocol-Connectivity Access Network, IP-CAN) session of the PDN connection to a policy and charging rules function entity, to obtain a corresponding policy such as charging and quality of service.

Step 906: The data gateway sends a session establishment response message to the serving gateway, where the session establishment response message includes information such as a bearer quality of service parameter and an aggregate maximum rate (aggregate maximum bit rate, APN-AMBR).

Step 907: The serving gateway sends the session establishment response message to the enhanced mobility management device, where the session establishment response message includes information such as the bearer quality of service parameter and the access device name aggregate maximum rate.

Step 908: The enhanced mobility management device determines an N1 container and an N2 container, where the N1 container includes a PDU session establishment response message, and the PDU session establishment response message may include a quality of service parameter 1 (a 5G quality of service rule and a QoS flow description) of a 5G QoS flow, a session aggregate maximum rate, or a mapping bearer context. The N2 container may include PDU session resource establishment request transfer information, and the PDU session resource establishment request transfer information may include a session aggregate maximum rate and a quality of service parameter 2 of the 5G QoS flow.

Specifically, the enhanced mobility management device determines the session aggregate maximum rate based on the access device name aggregate maximum rate. For example, the enhanced mobility management device may directly determine, according to a local policy, the access device name aggregate maximum rate as the session aggregate maximum rate. For another example, the session aggregate maximum rate may be half of the access device name aggregate maximum rate.

The enhanced mobility management device maps the bearer quality of service parameter to the quality of service parameter 2 of the 5G QoS flow. For example, the enhanced mobility management device maps a QoS class identifier (QoS class identifier, QCI) to a 5G quality of service identifier (5G QoS Identifier, 5QI), for example, maps the QCI=1 to the 5QI=1; obtains a locally configured non-dynamic 5QI or dynamic 5QI-related parameter; maps a bandwidth of a bearer to a bandwidth of a QoS flow; and obtains a parameter such as a locally configured maximum packet loss rate.

The enhanced mobility management device maps the bearer quality of service parameter to the quality of service parameter 1 of the 5G QoS flow, which includes the 5G quality of service rule and the QoS flow description. For example, the enhanced mobility management device allocates a quality of service rule identifier, and sets a default flag or a non-default flag. The enhanced mobility management device may set a default flag for a quality of service rule established in a PDU session establishment procedure; determine a rule operation, for example, set the rule operation to establishing a new quality of service rule in this procedure; and determine an operation code of the QoS flow description, for example, set the operation code to establishing a new QoS flow description in this procedure.

The enhanced mobility management device determines the mapping bearer context based on the bearer quality of service parameter.

Step 909: The enhanced mobility management device sends a PDU session resource establishment request message to the access device, where the PDU session resource establishment request message includes a downlink NAS transmission message sent to the terminal device, the downlink NAS transmission message includes an N1 container and a type of the N1 container, the type of the N1 container may be set to N1 session management information, and the N1 session management information is a PDU session establishment accept message. The PDU session resource establishment request message further includes an N2 container, and the N2 container includes PDU session resource establishment request transfer information.

Step 910: The access device sends the downlink NAS transmission message to the terminal device.

Step 911: The access device sends a PDU session resource establishment response message to the enhanced mobility management device, where the PDU session resource establishment response message includes an N2 container, the N2 container includes PDU session resource establishment response transfer information, and the PDU session resource establishment response transfer information includes access device user plane forwarding information.

Step 912: The enhanced mobility management device parses the N2 container to obtain the access device user plane forwarding information.

Step 913: The enhanced mobility management device sends a bearer update request message to the serving gateway, where the bearer update request message includes the access device user plane forwarding information.

Step 914: The serving gateway sends a bearer update response message to the enhanced mobility management device, to indicate that the PDU session is successfully established.

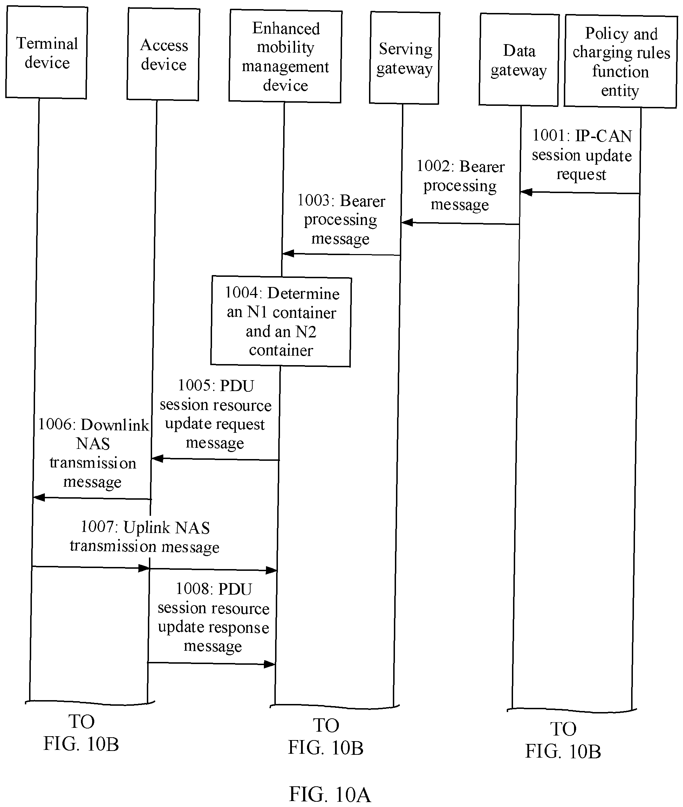

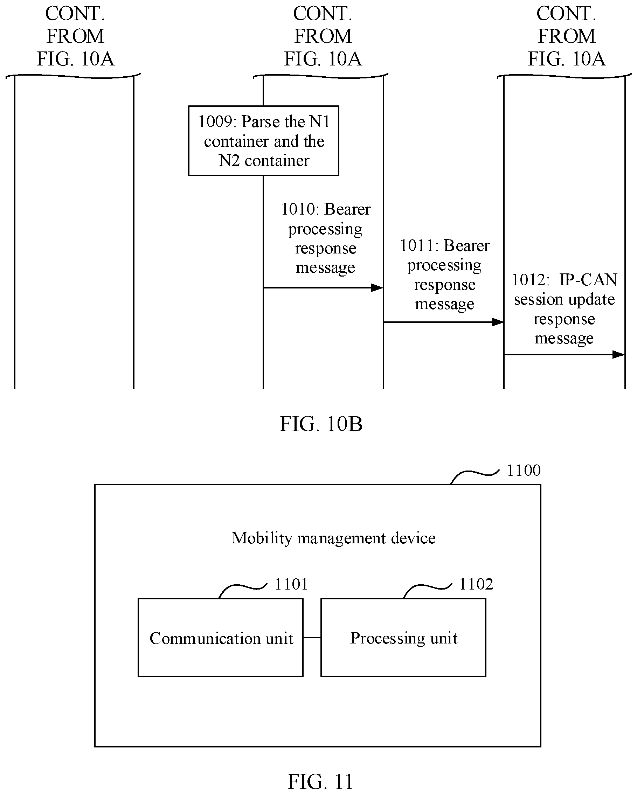

Based on the foregoing embodiments, an embodiment of this application provides an example of a session management method. In this example, a mobility management device is shown as an enhanced mobility management device. This example shows a specific process of session management in a PDU session update procedure. Refer to FIG. 10A and FIG. 10B. A specific procedure of the example may include the following steps.

Step 1001: A policy and charging rules function entity sends an IP-CAN session update request to a data gateway, to update information such as a quality of service policy.

Step 1002: The data gateway sends a bearer processing message to a serving gateway, where the bearer processing message is used to establish, update, or delete a bearer of a terminal device, the bearer processing message includes information such as a bearer quality of service parameter and an access device name aggregate maximum rate, and the bearer processing message may be a bearer establishment request message, a bearer update request message, a bearer deletion request message, or the like.

Step 1003: The serving gateway sends the bearer processing message to the enhanced mobility management device, where the bearer processing message includes the information such as the bearer quality of service parameter and the access point name aggregate maximum rate.

Step 1004: The enhanced mobility management device determines an N1 container and an N2 container, where the N1 container includes a PDU session update request message, and the PDU session update request message may include a quality of service parameter 1 (a 5G quality of service rule and a QoS flow description) of a 5G QoS flow, a session aggregate maximum rate, or a mapping bearer context. The N2 container may include PDU session resource update request transfer information, and the PDU session resource update request transfer information includes the session aggregate maximum rate and a quality of service parameter 2 of the 5G QoS flow.

Specifically, the enhanced mobility management device determines the session aggregate maximum rate based on the access device name aggregate maximum rate. For example, the enhanced mobility management device may directly determine, according to a local policy, the access point name aggregate maximum rate as the session aggregate maximum rate. For another example, the session aggregate maximum rate may be half of the access point name aggregate maximum rate.

The enhanced mobility management device maps the bearer quality of service parameter to the quality of service parameter 2 of the 5G QoS flow. For example, the enhanced mobility management device maps a QCI to a 5QI, for example, maps the QCI=1 to the 5QI=1; obtains a locally configured non-dynamic 5QI or dynamic 5QI-related parameter; maps a bandwidth of a bearer to a bandwidth of a QoS flow; and obtains a parameter such as a locally configured maximum packet loss rate.

The enhanced mobility management device maps the bearer quality of service parameter to the quality of service parameter 1 of the 5G QoS flow, that is, the 5G quality of service rule and the QoS flow description. For example, the enhanced mobility management device allocates a quality of service rule identifier; determines a rule operation, and determines, based on the bearer processing message and the bearer quality of service parameter included in the bearer processing message, that the rule operation is establishing a new rule, deleting an existing rule, updating an existing rule and a data packet filter, updating an existing rule and replacing a data packet filter, updating an existing rule and deleting a data packet filter, or updating an existing rule without updating a data packet filter; and determines an operation code of the QoS flow description, and determines, based on the bearer processing message and the bearer quality of service parameter included in the bearer processing message, that the operation code is establishing a new QoS flow description, deleting an existing QoS flow description, or updating an existing QoS flow description. For example, if a bearer establishment message is received, the operation code is establishing a new QoS flow description; if a bearer update request message is received, the operation code is updating an existing QoS flow description; or if a bearer deletion request message is received, the operation code is deleting an existing QoS flow description.

The enhanced mobility management device determines the mapping bearer context based on the bearer processing message and the bearer quality of service parameter included in the bearer processing message.

Step 1005: The enhanced mobility management device sends a PDU session resource update request message to the access device, where the PDU session resource update request message includes a downlink NAS transmission message sent to the terminal device, the downlink NAS transmission message includes an N1 container and a type of the N1 container, the type of the N1 container is set to N1 session management information, and the N1 session management information includes a PDU session update request message. The PDU session resource update request message further includes an N2 container, and the N2 container includes PDU session resource update request transfer information.

Step 1006: The access device sends the downlink NAS transmission message to the terminal device.

Step 1007: The terminal device sends an uplink NAS transmission message to the enhanced mobility management device, where the uplink NAS transmission message includes an N1 container and a type of the N1 container, and the N1 container includes a PDU session update complete message.

Specifically, the terminal device first sends the uplink NAS transmission message to the access device, and then the access device forwards the uplink NAS transmission message to the enhanced mobility management device.

Step 1008: The access device sends a PDU session resource update response message to the enhanced mobility management device, where the PDU session resource update response message includes an N2 container, and the N2 container includes PDU session resource update response transfer information.

Step 1009: The enhanced mobility management device parses the N1 container and the N2 container to learn that the terminal device and the access device successfully update the PDU session.

Step 1010: The enhanced mobility management device sends a bearer processing response message to the serving gateway, where the bearer processing response message is used to notify that the bearer of the terminal device is successfully established, updated, or deleted.

For example, the bearer processing response message may be a bearer establishment response message, a bearer update response message, a bearer deletion response message, or the like.

Step 1011: The serving gateway sends the bearer processing response message to the data gateway, to indicate that the bearer is successfully established, updated, or deleted.

Step 1012: The data gateway sends an IP-CAN session update response message to the policy and charging rules function entity.

It should be noted that the enhanced mobility management device needs to determine, based on a received GTP message and a quality of service parameter carried in the GTP message, a type of a message sent to the terminal device or the access device. For example, if a bearer establishment, update, or deletion message is received, a session management message sent to the terminal device is a PDU session update request message, and a PDU session resource update request message is sent to the access device. Conversely, the enhanced mobility management device needs to determine a GTP message based on a received session management message sent by the terminal device and a 5G quality of service rule or a QoS flow description carried in the received session management message. For example, if the terminal device sends a PDU session update request message, where a rule operation in the 5G quality of service rule is deleting an existing rule or an operation code in the QoS flow description is deleting an existing QoS flow description, the enhanced mobility management device sends a bearer deletion request to the serving gateway. For another example, if the terminal device sends a PDU session update request message, where a rule operation in the 5G quality of service rule is updating an existing rule without updating a data packet filter or an operation code in the QoS flow description is updating an existing QoS flow description, the enhanced mobility management device sends a bearer update request to the serving gateway.

It should be noted that PDU session establishment and bearer establishment, update, or deletion procedures are described in the examples shown in FIG. 9A and FIG. 9B and FIG. 10A and FIG. 10B. Actually, in other procedures such as a service request procedure, a registration procedure, and a handover procedure, the enhanced mobility management device also needs to perform the SM and MM decoupling operation in the foregoing examples. This is not enumerated one by one in this application.

It should be noted that in the examples shown in FIG. 9A and FIG. 9B and FIG. 10A and FIG. 10B, that the bearer quality of service parameter is mapped to the 5G quality of service parameter is described. Actually, the enhanced mobility management device also needs to support reverse mapping. For example, when initiating a PDU session update procedure, the terminal device determines the bearer quality of service parameter based on the 5G quality of service parameter.

Based on the foregoing embodiments, an embodiment of this application further provides a mobility management device. The mobility management device is applied to the communication system shown in FIG. 2a, and is configured to implement the session management method shown in the foregoing embodiments. As shown in FIG. 11, the mobility management device 1100 includes a communication unit 1101 and a processing unit 1102.

In an embodiment, when the mobility management device 1100 is configured to implement the session management method shown in FIG. 3,
the communication unit 1101 is configured to receive a mobility management message sent by a terminal device, where the mobility management message includes an N1 container, the N1 container includes a session management message, and the session management message is used to establish, update, or delete a packet data unit PDU session of the terminal device;
the processing unit 1102 is configured to change the session management message into a bearer processing message, where the bearer processing message is used to establish, update, or delete a bearer of the terminal device; and
the communication unit 1101 is further configured to send the bearer processing message to a serving gateway.

In an optional implementation, when the session management message included in the N1 container is a PDU session establishment request message, where the PDU session establishment request message is used to request to establish a PDU session for the terminal device, the processing unit 1102 is further configured to select the serving gateway for the terminal based on the PDU session establishment request message and subscription information of the terminal device.

For example, the processing unit 1102 is further configured to determine a type of the bearer processing message based on a type of the session management message included in the N1 container.

Specifically, when the session management message includes a quality of service parameter of a 5G flow, the processing unit 1102 is further configured to change the quality of service parameter of the 5G flow into a bearer quality of service parameter, where the bearer processing message sent by the communication unit 1101 includes the bearer quality of service parameter.

In another embodiment, when the mobility management device 1100 is configured to implement the session management method shown in FIG. 4,
the communication unit 1101 is configured to receive a mobility management message or a session management message sent by an access device, where the mobility management message or the session management message includes an N2 container, the N2 container includes a session management parameter, and the session management parameter is used to establish, update, or delete a packet data unit PDU session of a terminal device;
the processing unit 1102 is configured to change the session management parameter into a bearer processing message, where the bearer processing message is used to establish, update, or delete a bearer of the terminal device; and
the communication unit 1101 is further configured to send the bearer processing message to a serving gateway.

In an optional implementation, the processing unit 1102 is further configured to determine a type of the bearer processing message based on a type of the session management parameter included in the N2 container.

For example, when the session management parameter includes a quality of service parameter of a 5G flow, the processing unit 1102 is further configured to change the quality of service parameter of the 5G flow into a bearer quality of service parameter, where the bearer processing message sent by the communication unit 1101 includes the bearer quality of service parameter.

In another embodiment, when the mobility management device 1100 is configured to implement the session management method shown in FIG. 5,
the communication unit 1101 is configured to receive a bearer processing message sent by a serving gateway, where the bearer processing message is used to establish, update, or delete a bearer of a terminal device;
the processing unit 1102 is configured to determine an N1 container based on the bearer processing message, where the N1 container includes a session management message, and the session management message is used to establish, update, or delete a packet data unit PDU session of the terminal device; and
the communication unit 1101 is further configured to send a mobility management message to the terminal device, where the mobility management message includes the N1 container.

In an optional implementation, the processing unit 1102 is further configured to determine, based on a type of the bearer processing message, a type of the session management message included in the N1 container.

For example, the bearer processing message includes a 4G quality of service parameter. The processing unit 1102 is further configured to change the 4G quality of service parameter into a 5G quality of service parameter, where the N1 container in the mobility management message sent by the communication unit 1101 includes the 5G quality of service parameter.

Specifically, the processing unit 1102 is further configured to: determine a session aggregate maximum rate based on an access device name aggregate maximum rate; or determine a quality of service parameter of a 5G flow based on a bearer quality of service parameter, where the 4G quality of service parameter includes the access device name aggregate maximum rate or the bearer quality of service parameter, and the 5G quality of service parameter includes the session aggregate maximum rate or the quality of service parameter of the 5G flow.

Optionally, when the N1 container in the mobility management message sent by the communication unit 1101 includes the 5G quality of service parameter, the processing unit 1102 is further configured to determine a rule operation of a quality of service rule or an operation code of a quality of service flow description based on the type of the bearer processing message and the 4G quality of service parameter, where the quality of service parameter of the 5G flow includes the quality of service rule or the quality of service flow description.

In another embodiment, when the mobility management device 1100 is configured to implement the session management method shown in FIG. 6,
the communication unit 1101 is configured to receive a bearer processing message sent by a serving gateway, where the bearer processing message is used to establish, update, or delete a bearer of a terminal device;
the processing unit 1102 is configured to determine an N2 container based on the bearer processing message, where the N2 container includes a session management parameter, and the session management parameter is used to establish, update, or delete a packet data unit PDU session of the terminal device; and
the communication unit 1101 is further configured to send a mobility management message or a session management message to an access device, where the mobility management message or the session management message includes the N2 container.

In an optional implementation, the processing unit 1102 is further configured to determine, based on a type of the bearer processing message, a type of the session management parameter included in the N2 container.

For example, the bearer processing message includes a 4G quality of service parameter. The processing unit 1102 is further configured to change the 4G quality of service parameter into a 5G quality of service parameter, where the N2 container in the mobility management message or the session management message sent by the communication unit 1101 includes the 5G quality of service parameter.

Specifically, the processing unit 1102 is further configured to: determine a session aggregate maximum rate based on an access device name aggregate maximum rate; or determine a quality of service parameter of a 5G flow based on a bearer quality of service parameter, where the 4G quality of service parameter includes the access device name aggregate maximum rate or the bearer quality of service parameter, and the 5G quality of service parameter includes the session aggregate maximum rate or the quality of service parameter of the 5G flow.

It should be noted that, in embodiments of this application, division into the units is an example, and is merely logical function division. During actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

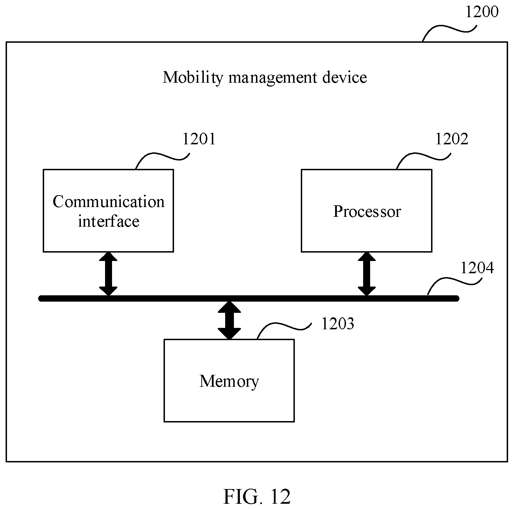

Based on the foregoing embodiments, an embodiment of this application further provides a mobility management device. The mobility management device is applied to the communication system shown in FIG. 2a, and is configured to implement the session management method shown in the foregoing embodiments. Refer to FIG. 12. The mobility management device 1200 may include a communication interface 1201 and a processor 1202, and optionally may further include a memory 1203. The processor 1202 may be a central processing unit (central processing unit, CPU), a network processor (network processor, NP), a combination of a CPU and an NP, or the like. The processor 1202 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 1202 may implement the foregoing functions by hardware or by hardware executing corresponding software.

The communication interface 1201 and the processor 1202 are connected to each other. Optionally, the communication interface 1201 and the processor 1202 are connected to each other through a bus 1204. The bus 1204 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 12, but this does not mean that there is only one bus or only one type of bus.

The memory 1203 is coupled to the processor 1202, and is configured to store a program and the like that are necessary for the SRS transmission apparatus 1200. For example, the program may include program code, and the program code includes computer operation instructions. The memory 1203 may include a RAM, and may further include a non-volatile memory (non-volatile memory), for example, at least one magnetic disk memory. The processor 1202 executes an application program stored in the memory 1203 to implement a function of the mobility management device 1200.

In an embodiment, when the mobility management device 1200 is configured to implement the session management method shown in FIG. 3,
the communication interface 1201 is configured to receive a mobility management message sent by a terminal device, where the mobility management message includes an N1 container, the N1 container includes a session management message, and the session management message is used to establish, update, or delete a packet data unit PDU session of the terminal device;
the processor 1202 is configured to change the session management message into a bearer processing message, where the bearer processing message is used to establish, update, or delete a bearer of the terminal device; and
the communication interface 1201 is further configured to send the bearer processing message to a serving gateway.

In an optional implementation, when the session management message included in the N1 container is a PDU session establishment request message, where the PDU session establishment request message is used to request to establish a PDU session for the terminal device, the processor 1202 is further configured to select the serving gateway for the terminal based on the PDU session establishment request message and subscription information of the terminal device.

For example, the processor 1202 is further configured to determine a type of the bearer processing message based on a type of the session management message included in the N1 container.

Specifically, when the session management message includes a quality of service parameter of a 5G flow, the processor 1202 is further configured to change the quality of service parameter of the 5G flow into a bearer quality of service parameter, where the bearer processing message sent by the communication interface 1201 includes the bearer quality of service parameter.

In another embodiment, when the mobility management device 1200 is configured to implement the session management method shown in FIG. 4,
the communication interface 1201 is configured to receive a mobility management message or a session management message sent by an access device, where the mobility management message or the session management message includes an N2 container, the N2 container includes a session management parameter, and the session management parameter is used to establish, update, or delete a packet data unit PDU session of a terminal device;
the processor 1202 is configured to change the session management parameter into a bearer processing message, where the bearer processing message is used to establish, update, or delete a bearer of the terminal device; and
the communication interface 1201 is further configured to send the bearer processing message to a serving gateway.

In an optional implementation, the processor 1202 is further configured to determine a type of the bearer processing message based on a type of the session management parameter included in the N2 container.

For example, when the session management parameter includes a quality of service parameter of a 5G flow, the processor 1202 is further configured to change the quality of service parameter of the 5G flow into a bearer quality of service parameter, where the bearer processing message sent by the communication interface 1201 includes the bearer quality of service parameter.

In another embodiment, when the mobility management device 1200 is configured to implement the session management method shown in FIG. 5,
the communication interface 1201 is configured to receive a bearer processing message sent by a serving gateway, where the bearer processing message is used to establish, update, or delete a bearer of a terminal device;
the processor 1202 is configured to determine an N1 container based on the bearer processing message, where the N1 container includes a session management message, and the session management message is used to establish, update, or delete a packet data unit PDU session of the terminal device; and
the communication interface 1201 is further configured to send a mobility management message to the terminal device, where the mobility management message includes the N1 container.

In an optional implementation, the processor 1202 is further configured to determine, based on a type of the bearer processing message, a type of the session management message included in the N 1 container.

For example, the bearer processing message includes a 4G quality of service parameter. The processor 1202 is further configured to change the 4G quality of service parameter into a 5G quality of service parameter, where the N1 container in the mobility management message sent by the communication interface 1201 includes the 5G quality of service parameter.

Specifically, the processor 1202 is further configured to: determine a session aggregate maximum rate based on an access device name aggregate maximum rate; or determine a quality of service parameter of a 5G flow based on a bearer quality of service parameter, where the 4G quality of service parameter includes the access device name aggregate maximum rate or the bearer quality of service parameter, and the 5G quality of service parameter includes the session aggregate maximum rate or the quality of service parameter of the 5G flow.

Optionally, when the N1 container in the mobility management message sent by the communication interface 1201 includes the 5G quality of service parameter, the processor 1202 is further configured to determine a rule operation of a quality of service rule or an operation code of a quality of service flow description based on the type of the bearer processing message and the 4G quality of service parameter, where the quality of service parameter of the 5G flow includes the quality of service rule or the quality of service flow description.

In another embodiment, when the mobility management device 1200 is configured to implement the session management method shown in FIG. 6,
the communication interface 1201 is configured to receive a bearer processing message sent by a serving gateway, where the bearer processing message is used to establish, update, or delete a bearer of a terminal device;
the processor 1202 is configured to determine an N2 container based on the bearer processing message, where the N2 container includes a session management parameter, and the session management parameter is used to establish, update, or delete a packet data unit PDU session of the terminal device; and
the communication interface 1201 is further configured to send a mobility management message or a session management message to an access device, where the mobility management message or the session management message includes the N2 container.

In an optional implementation, the processor 1202 is further configured to determine, based on a type of the bearer processing message, a type of the session management parameter included in the N2 container.

For example, the bearer processing message includes a 4G quality of service parameter. The processor 1202 is further configured to change the 4G quality of service parameter into a 5G quality of service parameter, where the N2 container in the mobility management message or the session management message sent by the communication interface 1201 includes the 5G quality of service parameter.

Specifically, the processor 1202 is further configured to: determine a session aggregate maximum rate based on an access device name aggregate maximum rate; or determine a quality of service parameter of a 5G flow based on a bearer quality of service parameter, where the 4G quality of service parameter includes the access device name aggregate maximum rate or the bearer quality of service parameter, and the 5G quality of service parameter includes the session aggregate maximum rate or the quality of service parameter of the 5G flow.

In conclusion, by using the session management method and the apparatus provided in embodiments of this application, when the 5G terminal device and the access device access the evolved packet core network, the 5G session management and mobility management decoupling function can be supported without changing the 5G terminal device and the access device, to ensure that the terminal device supports native access of the 5G terminal device.

A person skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Definitely, a person skilled in the art can make various modifications and variations to embodiments of this application without departing from the scope of embodiments of this application. This application is intended to cover these modifications and variations of embodiments of this application provided that they fall within the scope of protection defined by the following claims and their equivalent technologies.

## Claims

1. A session management method, comprising:
receiving, by a mobility management device, a mobility management message sent by a terminal device, wherein the mobility management message comprises an N1 container, the N1 container comprises a session management message, and the session management message is used to establish, update, or delete a packet data unit PDU session of the terminal device;
changing, by the mobility management device, the session management message into a bearer processing message, wherein the bearer processing message is used to establish, update, or delete a bearer of the terminal device; and
sending, by the mobility management device, the bearer processing message to a serving gateway.

2. The method according to claim 1, wherein the method further comprises:
when the session management message comprised in the N1 container is a PDU session establishment request message, wherein the PDU session establishment request message is used to request to establish a PDU session for the terminal device,
selecting, by the mobility management device, the serving gateway for the terminal based on the PDU session establishment request message and subscription information of the terminal device.

3. The method according to claim 1 or 2, wherein the method further comprises:
determining, by the mobility management device, a type of the bearer processing message based on a type of the session management message comprised in the N1 container.

4. The method according to any one of claims 1 to 3, wherein the session management message comprises a quality of service parameter of a 5G flow, and wherein the method further comprises:
changing, by the mobility management device, the quality of service parameter of the 5G flow into a bearer quality of service parameter, wherein
the bearer processing message sent by the mobility management device comprises the bearer quality of service parameter.

5. A session management method, comprising:
receiving, by a mobility management device, a mobility management message or a session management message sent by an access device, wherein the mobility management message or the session management message comprises an N2 container, the N2 container comprises a session management parameter, and the session management parameter is used to establish, update, or delete a packet data unit PDU session of a terminal device;
changing, by the mobility management device, the session management parameter into a bearer processing message, wherein the bearer processing message is used to establish, update, or delete a bearer of the terminal device; and
sending, by the mobility management device, the bearer processing message to a serving gateway.

6. The method according to claim 5, wherein the method further comprises:
determining, by the mobility management device, a type of the bearer processing message based on a type of the session management parameter comprised in the N2 container.

7. The method according to claim 5 or 6, wherein the session management parameter comprises a quality of service parameter of a 5G flow, and wherein the method further comprises:
changing, by the mobility management device, the quality of service parameter of the 5G flow into a bearer quality of service parameter, wherein
the bearer processing message sent by the mobility management device comprises the bearer quality of service parameter.

8. A session management method, comprising:
receiving, by a mobility management device, a bearer processing message sent by a serving gateway, wherein the bearer processing message is used to establish, update, or delete a bearer of a terminal device;
determining, by the mobility management device, an N1 container based on the bearer processing message, wherein the N1 container comprises a session management message, and the session management message is used to establish, update, or delete a packet data unit PDU session of the terminal device; and
sending, by the mobility management device, a mobility management message to the terminal device, wherein the mobility management message comprises the N1 container.

9. The method according to claim 8, wherein the method further comprises:
determining, by the mobility management device based on a type of the bearer processing message, a type of the session management message comprised in the N1 container.

10. The method according to claim 8 or 9, wherein the bearer processing message comprises a 4G quality of service parameter, and wherein the method further comprises:
changing, by the mobility management device, the 4G quality of service parameter into a 5G quality of service parameter, wherein
the N1 container in the mobility management message sent by the mobility management device comprises the 5G quality of service parameter.

11. The method according to claim 10, wherein the 4G quality of service parameter comprises an access device name aggregate maximum rate or a bearer quality of service parameter, and the 5G quality of service parameter comprises a session aggregate maximum rate or a quality of service parameter of a 5G flow, and wherein the method further comprises:
determining, by the mobility management device, the session aggregate maximum rate based on the access device name aggregate maximum rate; or
determining, by the mobility management device, the quality of service parameter of the 5G flow based on the bearer quality of service parameter.

12. The method according to claim 11, wherein when the N1 container in the mobility management message sent by the mobility management device comprises the 5G quality of service parameter, the method further comprises:
wherein the quality of service parameter of the 5G flow comprises a quality of service rule or a quality of service flow description,
determining, by the mobility management device, a rule operation of the quality of service rule or an operation code of the quality of service flow description based on the type of the bearer processing message and the 4G quality of service parameter.

13. A session management method, comprising:
receiving, by a mobility management device, a bearer processing message sent by a serving gateway, wherein the bearer processing message is used to establish, update, or delete a bearer of a terminal device;
determining, by the mobility management device, an N2 container based on the bearer processing message, wherein the N2 container comprises a session management parameter, and the session management parameter is used to establish, update, or delete a packet data unit PDU session of the terminal device; and
sending, by the mobility management device, a mobility management message or a session management message to an access device, wherein the mobility management message or the session management message comprises the N2 container.

14. The method according to claim 13, wherein the method further comprises:
determining, by the mobility management device based on a type of the bearer processing message, a type of the session management parameter comprised in the N2 container.

15. The method according to claim 13 or 14, wherein the bearer processing message comprises a 4G quality of service parameter, and wherein the method further comprises:
changing, by the mobility management device, the 4G quality of service parameter into a 5G quality of service parameter, wherein
the N2 container in the mobility management message or the session management message sent by the mobility management device comprises the 5G quality of service parameter.

16. The method according to claim 15, wherein the method further comprises:
wherein the 4G quality of service parameter comprises an access device name aggregate maximum rate or a bearer quality of service parameter, and
the 5G quality of service parameter comprises a session aggregate maximum rate or a quality of service parameter of a 5G flow,
determining, by the mobility management device, the session aggregate maximum rate based on the access device name aggregate maximum rate; or
determining, by the mobility management device, the quality of service parameter of the 5G flow based on the bearer quality of service parameter.

17. A mobility management device, comprising:
a processor and a memory, wherein the processor and the memory are coupled to each other; and
the memory stores program code, and when the processor reads the program code stored in the memory and executes the program code, the mobility management device performs the method according to any one of claims 1 to 16.

18. A computer-readable storage medium, wherein the computer-readable storage medium stores computer-executable instructions, and when being invoked by a computer, the computer-executable instructions are used to enable the computer to perform the method according to any one of claims 1 to 16.
